# EUROPÄISCHE PATENTSCHRIFT

(11) **EP 0 458 098 B1**
(45) Veröffentlichungstag und Bekanntmachung des Hinweises auf die Patenterteilung: **19.04.1995**
(21) Anmeldenummer: 91107091.0
(22) Anmeldetag: 02.05.1991
(51) Int. Cl.: F16P 3/16, B27B 5/06

(54) **Schutz- und Abschaltvorrichtung**
Safety and cut-out device
Dispositif de protection et d'arrêt

(30) Priorität: 21.05.1990 DE 4016370
(43) Veröffentlichungstag der Anmeldung: 27.11.1991
(73) Patentinhaber: Jenkner, Erwin, D-71083 Herrenberg-Oberjesingen (DE)
(72) Erfinder: Jenkner, Erwin, D-71083 Herrenberg-Oberjesingen (DE)
(74) Vertreter: Becker, Maria, Dipl.-Phys.

(56) Entgegenhaltungen:
- FR-A- 2 385 503
- US-A- 3 861 016

## Beschreibung

Die Erfindung betrifft eine Schutz- und Abschaltvorrichtung für schienengeführte, durch eine Antriebsvorrichtung antreibbare Träger, insbesondere für einen, einen werkstückschiebertragenden Führungswagen einer Plattenvorschubvorrichtung nach dem Oberbegriff des Anspruchs 1.

Bei Plattenaufteilanlagen vorgeschalteten Plattenvorschubvorrichtungen ist es bekannt, den in der Regel mit Spannzangen ausgestatteten Werkstückschieber an lediglich einem Führungswagen seitlich anzuordnen, der entlang einer Führungsschiene entsprechend einem Arbeitsprogramm in Vorschubrichtung und ggf. auch in entgegengesetzter Richtung schrittweise verschiebbar geführt ist. Zwecks Abstützung eines Kippmoments ist hierbei der Führungswagen derart ausgelegt, dass er mit Führungsrollen an einer oberen und unteren Führungswange der Führungsschiene abgestützt und geführt ist und dabei, konstruktionsbedingt, mit einem Teil über die Führungsschiene vorsteht.

Es besteht deshalb die Möglichkeit, dass während der Bewegung des Führungswagens zwischen diesem und einem feststehenden Teil der Plattenvorschubvorrichtung Gliedmaßen der Bedienungsperson oder z.B. auf die Führungsschiene gelegte Gegenstände eingeklemmt werden können.

Der Erfindung liegt die Aufgabe zugrunde, schienengeführte und durch eine Antriebsvorrichtung antreibbare Träger, insbesondere Führungswagen von Plattenvorschubvorrichtungen, unfall- und betriebssicherer zu gestalten.

Diese Aufgabe wird erfindungsgemäss durch eine die kennzeichnenden Merkmale des Patentanspruches 1 aufweisende Schutz- und Abschaltvorrichtung gelöst.

Die Erfindung ermöglicht damit einen wirksamen Unfallschutz, ohne dass die gesamte, den schienengeführten Träger aufweisende Einrichtung mit einer aufwendigen Schutzvorrichtung ausgestattet werden muss, indem lediglich der Träger selbst zumindest in seinen zu Unfällen führenden Bereichen gekapselt ist.

Die hierzu vorgesehene Abdeckhaube bildet dabei zugleich ein Betätigungsglied für eine Schaltvorrichtung, die den Trägerantrieb ausser Kraft setzt, sobald die Abdeckhaube gegen einen Widerstand anfährt und dabei die Kupplung zwischen dieser und dem Träger löst.

Die Erfindung ist ebenso vorteilhaft geeignet für Plattenvorschubvorrichtungen, deren Werkstückschieber zwischen zwei Schienen geführten Führungswagen gehalten ist, wobei in diesem Falle beide Führungswagen entsprechend zu kapseln sind.

Die Erfindung ist jedoch nicht auf Plattenvorschubvorrichtungen von Plattenaufteilanlagen beschränkt, sondern generell für schienengebundene, angetriebene Träger geeignet, bei denen während ihres Betriebs Unfallgefahren gegeben sind.

Vorteilhafte Ausgestaltungen der Erfindung sind Gegenstand von Unteransprüchen.

In der Zeichnung ist ein Ausführungsbeispiel der Erfindung dargestellt. Es zeigen:
- Fig. 1: eine perspektivische Darstellung einer Plattenvorschubvorrichtung, stark schematisiert;
- Fig. 2: einen Querschnitt entlang der Linie 2-2 der Fig.1, in vergrössertem Maßstab;
- Fig. 3: einen Ausschnitt aus Fig. 2, in grösserem Maßstab als Fig. 2 und in einer Ansicht in Richtung des Pfeiles A der Fig. 1 gesehen und
- Fig. 4: eine Teilseitenansicht des Führungswagens der Plattenvorschubvorrichtung in Richtung des Pfeiles B der Fig. 2 gesehen, in einem anderen Maßstab, wobei lediglich dessen obere Führungsrollen gezeigt sind und die Abdeckhaube strichpunktiert angedeutet ist.

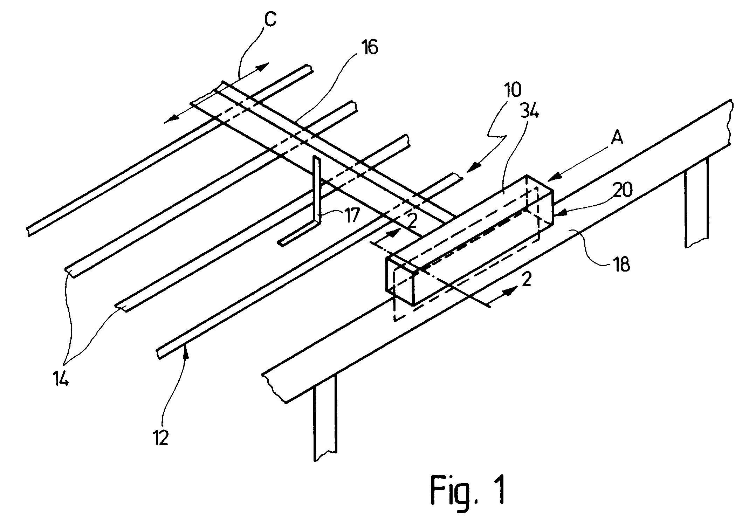

In Fig. 1 ist eine programmgesteuerte Plattenvorschubvorrichtung 10 gezeigt, die einer nicht gezeigten Plattenaufteilanlage vorgeschaltet ist. Sie weist in bekannter Weise einen Plattenauflagetisch 12 auf, der beispielsweise durch eine Vielzahl von sich in Vorschubrichtung erstreckenden, zueinander parallelen Auflageleisten 14 gebildet ist.

16 bezeichnet als Ganzes einen Spannzangen 17 tragenden und sich quer zur Vorschubrichtung über den Plattenauflagetisch 12 erstreckenden Werkstückschieber, der beispielsweise lediglich einen entlang einer seitlichen Führungsschiene 18 geführten Führungswagen 20 aufweist und in Richtung des in Fig. 1 gezeigten Doppelpfeiles C durch eine programmgesteuerte Antriebsvorrichtung steuerbar ist.

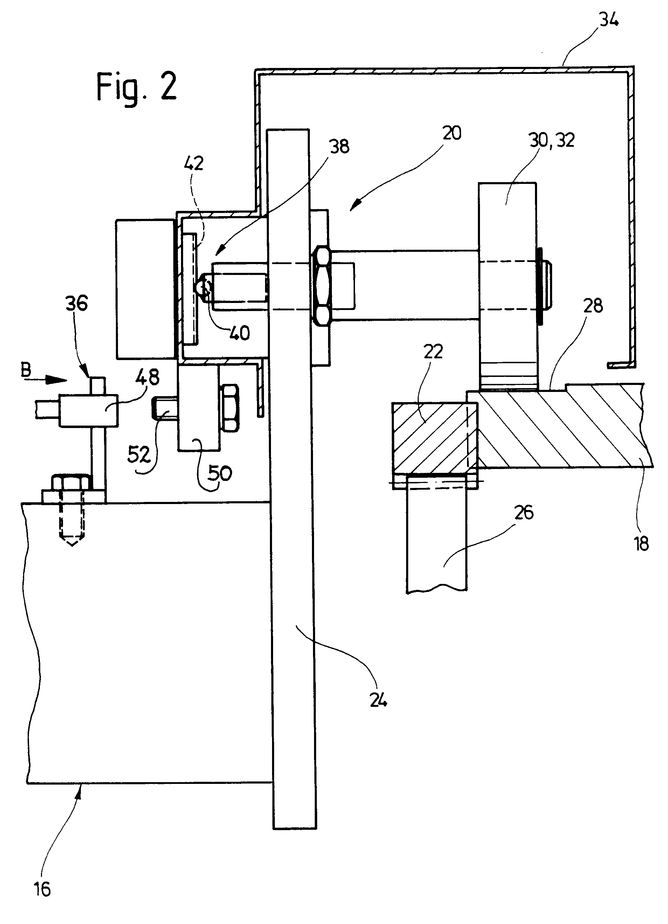

Von der Antriebsvorrichtung ist in Fig. 2 lediglich ein mit einer schienenfesten Zahnstange 22 kämmendes, an einer am Werkstückschieber 16 vertikal angeordneten Wagenplatte 24 gelagertes Antriebszahnrad 26 angedeutet.

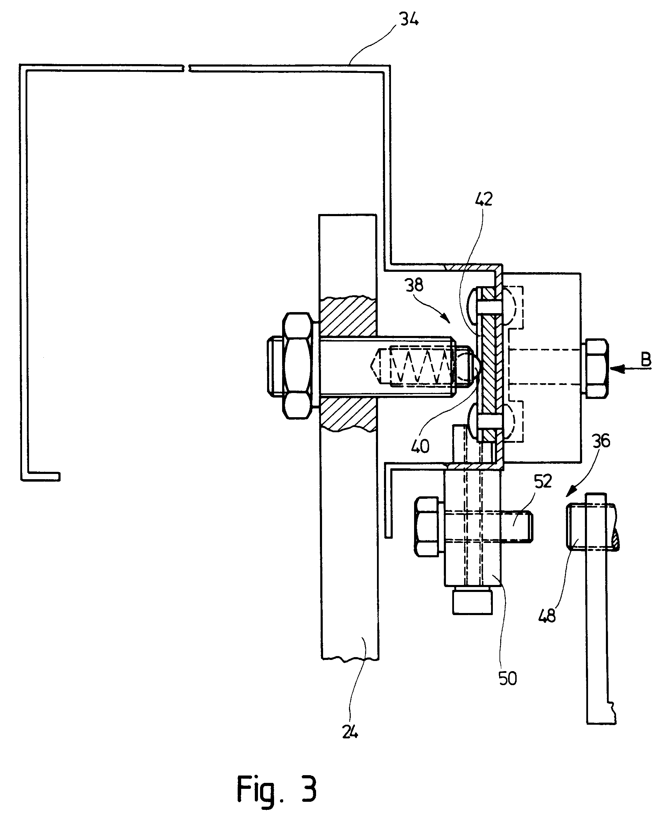

Wie aus den Fig. 2 und 3 ersichtlich ist, überragt die Wagenplatte 24 die Führungsschiene 18 und ist entlang einer oberen Führungswange 28 der Führungsschiene mittels eines Paares von Abstützrollen 30 und 32 geführt. Weitere zur kippsicheren Anordnung des Führungswagens 20 an der Führungsschiene 18 vorgesehene Führungselemente sind der Einfachheit halber nicht dargestellt.

Ebensogut kann der Werkstückschieber 16 aber auch an beiden Längsseiten des Plattenauflagetisches 12 mittels jeweils eines Führungswagens 20 in der erläuterten Art geführt sein, wobei dann lediglich an einem Führungswagen 20 ein mit einer Zahnstange 22 sich in Eingriff befindendes Antriebszahnrad 26 vorzusehen ist.

Der Führungswagen 20 bzw. jeder Führungswagen 20 ist von einer Abdeckhaube 34 überfangen, die in nicht näher gezeigter Weise auf diesem abnehmbar angeordnet ist. Beim vorliegenden Ausführungsbeispiel deckt dabei die Abdeckhaube 34 lediglich den über die Führungsschiene 18 überstehenden Wagenteil ab, der während seiner Vorschub- oder Rückbewegung mit seinen Stirnseiten an einen auf die Führungsschiene 18 aufgelegten Gegenstand oder an einen sich auf diese aufgelegten Arm oder eine Hand der Bedienungsperson anfahren kann.

Damit hierbei keine Beschädigungen bzw. Verletzungen durch Einklemmen entstehen können, dient die Abdeckhaube 34 zugleich als Betätigungsvorrichtung für eine den Wagenantrieb stillsetzende Not-Aus-Schaltvorrichtung 36.

Zu diesem Zweck ist die Abdeckhaube 34 am Führungswagen 20 bzw. an dessen Wagenplatte 24 in Richtung des Doppelpfeiles C jeweils um eine vorbestimmte Strecke verschiebbar, wobei sie in einer mittleren Ruhelage (Fig. 3) mit dem Führungswagen 20 über eine Kupplung 38 leicht lösbar gekuppelt ist. Letztere kann verschieden gestaltet sein. Vorzugsweise ist sie als Rastkupplung ausgebildet, die, gemäss Fig. 2 und 3, eine an der Wagenplatte 24 gehaltene, abgefederte Kugel 40 aufweist, die mit einer haubenseitigen Rastnut 42 verrastet ist.

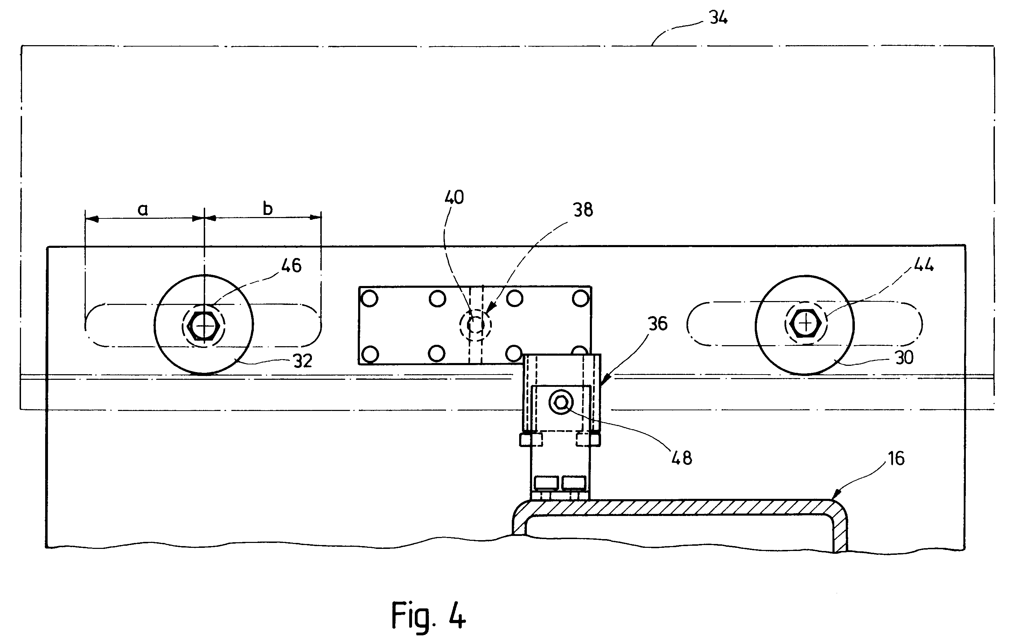

Wie Fig. 4 zeigt, ist die hier lediglich strichpunktiert angedeutete Abdeckhaube 34 auf Führungszapfen 44 und 46 an der Wagenplatte 24, ausgehend von ihrer Ruhestellung, um die Strecken a bzw. b horizontal verschiebbar geführt.

Die Not-Aus-Schaltvorrichtung 36 arbeitet vorzugsweise berührungslos. Sie ist durch einen am Werkstückschieber 16 sitzenden Näherungssensor 48 und durch ein haubenseitig in einem aus Kunststoff bestehenden Tragglied 50 einstellbar gehaltenes Bedämpfungsglied 52 gebildet.

In der mit der Wagenplatte 24 gekuppelten Ruhestellung der Abdeckhaube 34 (s. Fig. 4) stehen sich Näherungssensor 48 und Bedämpfungsglied 52 koaxial gegenüber, wobei die Not-Aus-Schaltvorrichtung 36 ausgeschaltet bleibt.

Wird die Abdeckhaube 34 durch Anlaufen an einen Gegenstand von der Wagenplatte 24 entkuppelt und verbleibt in der Anschlagstellung, während der Führungswagen 20 noch weiterläuft, bewegt sich der Näherungssensor 48 zusammen mit dem Werkstückschieber 16 vom Bedämpfungsglied 52 weg und aktiviert dadurch die Not-Aus-Schaltvorrichtung 36, die unverzüglich den Wagenantrieb stillsetzt.

Dabei ist die Konstruktion derart getroffen, dass die Strekke, die vom Führungswagen 20 bei entrasteter Abdeckhaube 24 noch zurückgelegt wird, im Bereich der Wagenendstellung bis zu dessen Stillstand stets noch so gross ist, dass noch ein Teil des Verschiebeweges verbleibt. Dadurch ist gewährleistet, dass auch in der Endphase von Wagenbewegungen beim Abkuppeln der Abdeckhaube 34 vom Führungswagen 20 beispielsweise eine dasselbe auslösende Hand einer Bedienungsperson nicht eingeklemmt werden kann.

Der Werkstückschieber 16 kann erneut nur dann wieder in Betrieb genommen werden, wenn zuvor die Abdeckhaube 34 manuell in ihre Ausgangsposition gebracht bzw. mit dem Führungswagen 20 erneut gekuppelt worden ist.

Anstelle der beschriebenen Schaltvorrichtung könnte diese auch so ausgelegt sein, dass deren Betätigungsglied zwei Haltglieder zugeordnet sind, von denen jeweils eines bei einer einsetzenden Relativbewegung zwischen Abdeckhaube 34 und Führungswagen 20 in der entsprechenden Fahrrichtung betätigt wird.

## Patentansprüche

1. Schutz- und Abschaltvorrichtung für einen schienengeführten, durch eine Antriebsvorrichtung antreibbaren und einen Werkstückschieber tragenden Führungswagen einer Plattenvorschubvorrichtung mit einer Schaltvorrichtung (36) zum Stillsetzen der Antriebsvorrichtung,
**gekennzeichnet durch**
eine den Führungswagen (20) abdeckende Abdeckhaube (34), wobei die Abdeckhaube (34) in mindestens einer Bewegungsrichtung des Führungswagens (20) bei Anlaufen an einen Gegenstand vom Führungswagen (20) selbsttätig abkuppelbar und durch die Relativbewegung zwischen Abdeckhaube (34) und Führungswagen (20) die Schaltvorrichtung (36) betätigbar ist.

2. Schutz- und Abschaltvorrichtung nach Anspruch 1, dadurch gekennzeichnet, dass die Schaltvorrichtung (36) ein Betätigungsglied (52) und ein Schaltglied (48) aufweist, von denen das eine durch einen Teil der Abdeckhaube (34) und das andere durch das Betätigungsglied (52) beaufschlagt ist.

3. Schutz- und Abschaltvorrichtung nach Anspruch 1 oder 2, dadurch gekennzeichnet, dass das Schaltglied der Schaltvorrichtung (36) einen berührungslos arbeitenden Näherungssensor (48) bildet, der in gekuppeltem Zustand von Abdeckhaube (34) und Führungswagen (20) einem ein Betätigungsglied bildenden Bedämpfungsglied (52) benachbart ist.

4. Schutz- und Abschaltvorrichtung nach einem der vorhergehenden Ansprüche, dadurch gekennzeichnet, dass die Abdeckhaube (34) am Führungswagen (20) mittels einer überfahrbaren Rastkupplung (38) festgelegt ist und an diesem in entrastetem Zustand um eine vorbestimmte Strecke (a bzw. b) verschiebbar geführt ist.

5. Schutz und Abschaltvorrichtung nach Anspruch 4, dadurch gekennzeichnet, dass die bei entrasteter Abdeckhaube (34) zurückgelegte Strecke des Führungswagens (20) derart bemessen ist, dass bei erreichtem Stillstand des Führungswagens (20) stets ein Teil seines maximalen Verschiebeweges noch undurchfahren ist.

## Claims

1. Safety and cut-out device for a track-guided guide carriage of a panel feeding device, arranged for being driven by a drive system and carrying a work slide, and provided with switching means (36) for stopping the drive mechanism,
**characterized in that**
there is provided a hood (34) covering the guide carriage (20), which hood (34), in at least one sense of movement of the guide carriage (20), can be uncoupled automatically from the guide carriage (20) when the latter runs up against an object, and that the switching device (36) can be operated by the relative movement between the hood (34) and the guide carriage (20).

2. Safety and cut-out device according to claim 1, characterized in that the switching device (36) comprises an actuating member (52) and a switching member (48), with a portion of the hood (34) acting on the one and the actuating member (52) acting on the other one of these members.

3. Safety and cut-out device according to claim 1 or 2, characterized in that the switching member of the switching device (36) constitutes a non-contact proximity sensor (48) which in the coupled condition of the hood (34) and the guide carriage (20) is positioned adjacent a damper (52) forming an actuating member.

4. Safety and cut-out device according to any of the preceding claims, characterized in that the hood (34) is fixed on the guide carriage (20) by an overrun-type snap-in coupling (38) and is guided thereon, in unlocked condition, for displacement by a predetermined travel (a or b).

5. Safety and cut-out device according to claim 4, characterized in that the length travelled by the guide carriage (20) in the unlocked condition of the hood (34) is selected in such a way that when the guide carriage (20) stops, there always remains a certain length of its maximum displacement that has not been travelled through.

## Revendications

1. Dispositif de protection et d'arrêt pour un chariot de guidage à rail, entraînable par un dispositif d'entraînement et portant un coulisseau de pièce, avec un dispositif de couplage (36) pour arrêter le dispositif d'entraînement,
**caractérisé par**
un capot (34) recouvrant le chariot de guidage (20), ce capot (34) étant découplable automatiquement dans au moins une direction de déplacement du chariot de guidage (20) lors de contact avec un objet du chariot de guidage (20) et en ce que le dispositif de couplage (36) est actionné par le mouvement relatif entre le capot (34) et le chariot de guidage (20).

2. Dispositif de protection et d'arrêt selon la revendication 1, caractérisé en ce que le dispositif de couplage (36) présente un organe de manoeuvre (52) et un organe de couplage (48) dont l'un est actionné par une partie du capot (34) et l'autre par l'organe de manoeuvre (52).

3. Dispositif de protection et d'arrêt selon la revendication 1 ou 2, caractérisé en ce que l'organe de couplage du dispositif de couplage (36) forme un détecteur de proximité (48) fonctionnant sans contact qui, en position accouplée du capot (34) et du chariot de guidage (20) est contigu à un organe d'atténuation (52) formant un organe de manoeuvre.

4. Dispositif de protection et d'arrêt selon l'une des revendications précédentes, caractérisé en ce que le capot (34) est fixé sur le chariot de guidage (20) au moyen d'un accouplement d'arrêt (38) franchissable et est guidé sur ce dernier, à l'état non enclenché, de façon déplaçable sur un trajet prédéterminé (a ou b).

5. Dispositif de protection et d'arrêt selon la revendication 4, caractérisé en ce que le trajet du chariot de guidage (20) parcouru à l'état non enclenché du capot (34) est dimensionné de telle sorte que, à l'arrêt du chariot de guidage (20), une partie de son trajet maximal de déplacement n'est pas encore franchie.
